# EUROPÄISCHE PATENTSCHRIFT

(11) **EP 0 951 113 B1**
(45) Veröffentlichungstag und Bekanntmachung des Hinweises auf die Patenterteilung: **27.12.2006**
(21) Anmeldenummer: 99103159.2
(22) Anmeldetag: 18.02.1999
(51) Int. Cl.: H02B 1/06, H02B 1/28

(54) **Rechteckiges Gehäuse zur Aufnahme elektrischer oder eletronischer Bauteile**
Rectangular case for electrical or electronic components
Boîte de forme rectangulaire pour loger des composants électriques ou électroniques

(30) Priorität: 17.04.1998 DE 29806876 U
(43) Veröffentlichungstag der Anmeldung: 20.10.1999
(73) Patentinhaber: H.-J. Bernstein GmbH, 32479 Hille (DE)
(72) Erfinder: Weiss, Jürgen, 32312 Lübbecke (DE)
(74) Vertreter: Stracke, Alexander

(56) Entgegenhaltungen:
- DE-U- 9 205 440
- US-A- 3 688 941
- US-A- 3 974 933

## Beschreibung

Die vorliegende Erfindung betrifft ein rechteckiges Gehäuse zur Aufnahme elektrischer oder elektronischer Bauteile mit einem die Seitenwand bildenden und aus Blech gefertigten Rahmen und einer am Rahmen festgelegten Frontplatte. (Siehe DE-U-9205440).

Der vorliegenden Erfindung liegt die Aufgabe zugrunde, ein Gehäuse der gattungsgemäßen Art zu schaffen, bei dem eine einfache und einwandfrei abgedichtete Festlegung der Frontplatte am Rahmen möglich ist.

Diese Aufgabe wird erfindungsgemäß dadurch gelöst, daß der Rahmen auf der der Frontplatte zugewandten Seife mit einer nach außen hin offenen und durch mehrfache Abkantung gebildeten, hinterschnittenen Nut versehen ist, daß die Nut durch einen auf die Frontplatte zuweisenden Abschlußsteg, einen parallel zur Frontplatte verlaufenden Mittelsteg und einen weiteren, etwa lotrecht zur Frontplatte verlaufenden Seitensteg begrenzt ist, und daß die Frontplatte auf ihrer im Rahmen zugewandten Seite mit einer umlaufenden Dichtung versehen ist, welche auf der Stirnkante des Abschlußsteges aufliegt, wobei die Frontplatte insgesamt durch mehrere Befestigungsschrauben gegen den Rahmen festgelegt ist.

Diese Konstruktion ermöglicht es, die Frontplatte auf einfache Art und Weise am Gehäuse bzw. an dessen Rahmen festzulegen unter gleichzeitiger Erzielung einer einwandfreien Abdichtung, wobei sowohl eine Festlegung der Frontplatte von ihrer Außenseite her, wie auch von der Innenseite her möglich ist, ohne daß dadurch ein Dichtungsproblem entsteht.

So können beispielsweise nach einem weiteren Gedanken der Erfindung die Befestigungsschrauben die Frontplatte durchtreten und in innerhalb der Aufnahmenut verschiebbare Muttern eingeschraubt sein.

In diesem Falle liegen die Durchbrechungen der Frontplatte, durch die die Schrauben hindurchgeführt werden müssen, außerhalb des abgedichteten Bereiches zwischen Frontplatte und Rahmen, so daß eine separate Abdichtung des Schraubbereiches nicht erforderlich ist.

Nach einem anderen Gedanken der Erfindung können die Befestigungsschrauben als Schraubenbolzen ausgebildet sein, die an der dem Gehäuse zugewandten Innenseite der Frontplatte befestigt sind und jeweils einen Schenkel eines L-förmigen Stützwinkels durchtreten, der sich mit dem vom Schraubenbolzen durchtretenen Schenkel auf dem Mittelsteg abstützt und mit seinem anderen Schenkel unmittelbar auf der Frontplatte aufsteht, wobei auf jeden Schraubenbolzen eine Mutter aufgeschraubt ist, welche gegen den auf den Mittelsteg aufliegenden Schenkel des Stützwinkels festgezogen ist.

In diesem Falle liegen die Befestigungsschrauben zwar innerhalb der durch die umlaufende Dichtung der Frontplatte liegenden Rahmenbereiches, durchtreten aber die Frontplatte selbst nicht, so daß auch in diesem Falle keinerlei Dichtprobleme entstehen. Außerdem sind in beiden Fällen komplizierte Befestigungsmechanismen nicht erforderlich, sondern lediglich einfache Befestigungsschrauben und ggfs. ebenfalls einfach herstellbare Stützwinkel.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: Eine perspektivische Darstellung eines erfindungsgemäßen Gehäuses mit zwei verschiedenen Möglichkeiten der Befestigung einer Frontplatte,
- Figur 2: einen Teilschnitt nach der Linie II-II in Figur 1,
- Figur 3: einen Schnitt nach der Linie III-III in Figur 1.

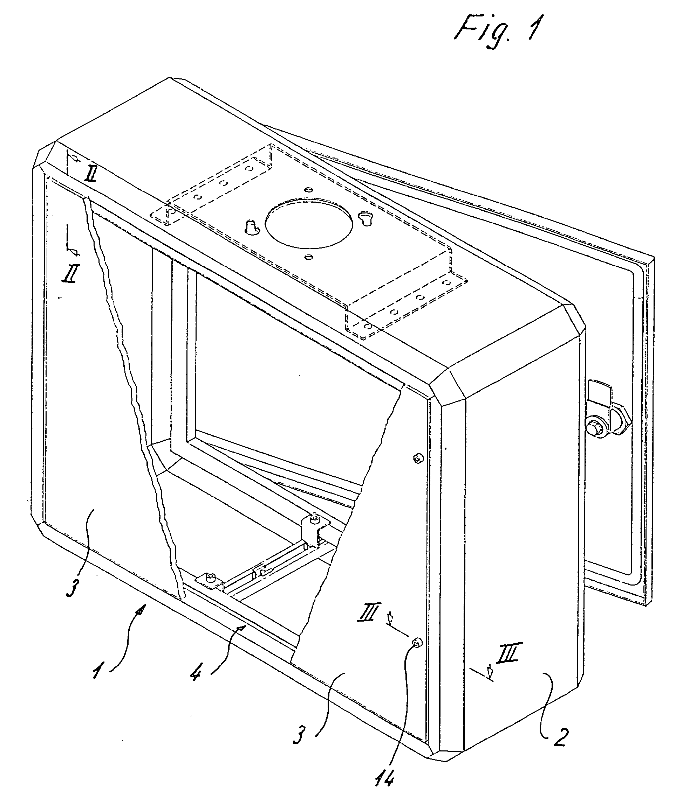

In Figur 1 ist mit dem Bezugszeichen 1 insgesamt ein etwa rechteckiges Gehäuse zur Aufnahme (nicht dargestellter) elektrischer oder elektronischer Bauteile bezeichnet, welches einen aus Blech gefertigten und die Seitenwände des Gehäuses 1 bildenden Rahmen (2) und eine Frontplatte 3 aufweist, die in Figur 1 aufgebrochen dargestellt wurde, um einen Blick in das Innere des Gehäuses 1 zu ermöglichen.

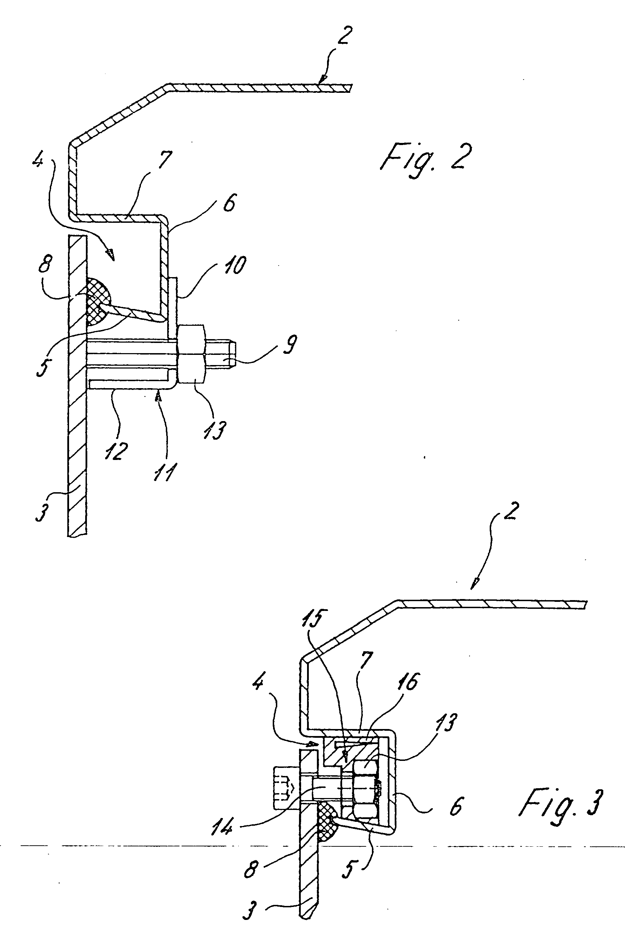

Der Rahmen 2 ist auf der der Frontplatte 3 zugewandten Seite mit einer nach außen hin offenen und durch mehrfache Abkantungen gebildeten, hinterschnittenen Nut 4 ausgestattet, was aus den Figuren 2 und 3 besonders deutlich hervorgeht.

Diese hinterschnittene Nut 4 wird begrenzt durch einen auf die Frontplatte 3 zuweisenden Abschlußsteg 5, einen parallel zur Frontplatte 3 verlaufenden Mittelsteg 6 sowie einen Seitensteg 7, der wiederum etwa lotrecht zur Frontplatte 3 verläuft. Der Abschlußsteg 5 verläuft gegenüber der Frontplatte 3 geneigt und schließt mit dem Mittelsteg 6 einen spitzen Winkel ein, so daß eine Hinterschneidung der Nut 4 gegeben ist.

Die Frontplatte 3 weist auf ihrer dem Rahmen 2 zugewandten Rückseite eine umlaufende Dichtung 8 auf, die fest mit der Frontplatte 3 verbunden ist, z. B. kann diese Dichtung 8 auf die Frontplatte 3 aufgeklebt sein.

Diese Dichtung 8 legt sich im montierten Zustand der Frontplatte 3 abdichtend auf die Stirnkante des Abschlußsteges 5 auf.

Die Figuren 2 und 3 zeigen zwei unterschiedliche Möglichkeiten der Festlegung der Frontplatte 3 gegenüber dem Rahmen 2.

In Figur 2 ist dargestellt, daß die Frontplatte 3 an der dem Gehäuse zugewandten Innenseite mit Schraubenbolzen 9 ausgestattet ist, die beispielsweise an der Frontplatte 3 angeschweißt sind. Diese Schraubenbolzen 9 durchtreten einen Schenkel 10 eines Stützwinkels 11, während der andere Schenkel 12 dieses Stützwinkels 11 mit seiner Stirnkante unmittelbar auf der Frontplatte 3 aufsteht. Der von den Schraubenbolzen 9 durchtretene Schenkel 10 jedes Stützwinkels 11 liegt auf dem Mittelsteg 6 auf. Auf die Schraubenbolzen 9 werden Muttern 13 auf geschraubt, die gegen den auf den Mittelsteg 6 aufliegenden Schenkel 10 des Stützwinkels 11 angezogen werden. Hierdurch wird die Frontplatte 3 fest an den Rahmen 2 angezogen, wobei die Dichtung 8 entsprechend fest gegen die vordere Stirnkante des Abschlußsteges 5 angezogen wird.

Beim Ausführungsbeispiel gemäß Figur 3 erfolgt die Festlegung der Frontplatte 3 durch Befestigungsschrauben 14, welche die Frontplatte 3 durchtreten und in Muttern 13 eingeschraubt sind, welche innerhalb der Nut 4 verschiebbar angeordnet sind. Vorteilhafterweise sind die Muttern 13 in ein Kunststofformteil 15 eingesetzt, welches mit einem federnden Schenkel 16 ausgestattet ist.

Die Kunststoffonnteile 15 sind hinsichtlich ihres Querschnittes der Form der hinterschnittenen Nut 4 angepaßt und aufgrund des federnden Schenkels 16 reibschlüssig in der Nut 4 gehalten. Die Muttern 13 sind verdrehsicher innerhalb der Kunststofformteile 15 eingesetzt.

Wie Figur 3 deutlich erkennen läßt, verlaufen die Befestigungsschrauben 14 außerhalb des abgedichteten Bereiches zwischen der Frontplatte 3 und dem Rahmen 2, so daß die Durchbrüche im Bereich der Frontplatte 3 nicht noch einmal separat abgedichtet werden müssen, um eine insgesamt dichte Verbindung zwischen Frontplatte 3 und Rahmen 2 zu gewährleisten.

Aufgrund der Gestaltung des Rahmens 2 bestehen, wie vorstehend beschrieben, zwei grundsätzlich unterschiedliche Möglichkeiten der Befestigung der Frontplatte 3, beide Möglichkeiten sind aber konstruktiv einfach zu realisieren und gewährleisten in jedem Falle einen absolut dichten Abschluß zwischen Frontplatte 3 und Rahmen 2.

## Patentansprüche

1. Rechteckiges Gehäuse (1) zur Aufnahme elektrischer oder elektronischer Bauteile mit einem die Seitenwände bildenden und aus Blech gefertigten Rahmen (2) und einer am Rahmen (2) festgelegten Frontplatte (3), **dadurch gekennzeichnet, daß** der Rahmen (2) auf der Frontplatte (3) zugewandten Seite mit einer nach außen hin offenen und durch mehrfache Abkantung gebildeten, hinterschnittenen Nut (4) versehen ist, daß die Nut (4) durch einen auf die Frontplatte (3) zuweisenden Abschlußsteg (5), einen parallel zur Frontplatte (3) verlaufenden Mittelsteg (6) und einen weiteren, etwa lotrecht zur Frontplatte (3) verlaufenden Seitensteg (7) begrenzt ist, und daß die Frontplatte (3) auf ihrer dem Rahmen (2) zugewandten Seite mit einer umlaufenden Dichtung (8) versehen ist, welche auf der Stirnkante des Abschlußsteges (5) aufliegt, wobei die Frontplatte (3) insgesamt durch mehrere Befestigungsschrauben (9, 14) gegen den Rahmen (2) festgelegt ist.

2. Gehäuse nach Anspruch 1, **dadurch gekennzeichnet, daß** die Befestigungsschrauben (14) die Frontplatte (3) durchtreten und in innerhalb der Nut (4) verschiebbare Muttern (13) eingeschraubt sind.

3. Gehäuse nach Anspruch 2, **dadurch gekennzeichnet, daß** die Muttern (13) verdrehsicher in Kunststofformteile (15) eingesetzt sind, wobei die Kunststofformteile (15) in ihrem Querschnitt an die Nut (4) angepaßt und mit einem federnden Schenkel (16) versehen und damit reibschlüssig in der Nut (4) gehalten sind.

4. Gehäuse nach Anspruch 1, **dadurch gekennzeichnet, daß** die Befestigungsschrauben als Schraubenbolzen (9) ausgebildet sind, die an der dem Gehäuse (1) zugewandten Innenseite der Frontplatte (3) befestigt sind und jeweils einen Schenkel eines L-förmigen Stützwinkels durchtreten, der sich mit dem vom Schraubenbolzen (9) durchtretenen Schenkel (10) auf den Mittelsteg (6) abstützt und mit seinem anderen Schenkel (12) unmittelbar auf der Frontplatte (3) aufsteht, wobei auf jeden Schraubenbolzen (9) eine Mutter (13) aufgeschraubt ist, welche gegen den auf den Mittelsteg (6) aufliegenden Schenkel (10) des Stützwinkels (11) festgezogen ist.

5. Gehäuse nach einem oder mehreren der vorhergehenden Ansprüche, **dadurch gekennzeichnet, daß** der Abschlußsteg (5) gegenüber der Frontplatte (3) geneigt verläuft und mit dem Mittelsteg (6) einen spitzen Winkel einschließt.

## Claims

1. Rectangular case (1) for holding electrical or electronic components, having a frame (2), which forms the side walls and is produced from sheet metal, and a front plate (3) which is fixed to the frame (2), **characterized in that** the frame (2) is provided with an undercut groove (4), which is open towards the outside and is formed by multiple edges, on the side which faces the front plate (3), **in that** the groove (4) is bounded by a termination web (5) which faces the front plate (3), a centre web (6) which runs parallel to the front plate (3), and a further side web (7) which runs approximately perpendicular to the front plate (3), and **in that** that side of the front plate (3) which faces the frame (2) is provided with a circumferential seal (8) which rests on the end edge of the termination web (5), with the front plate (3) being fixed to the frame (2) by a plurality of fastening screws (9, 14) overall.

2. Case according to Claim 1, **characterized in that** the fastening screws (14) pass through the front plate (3) and are screwed into nuts (13) which can move within the groove (4).

3. Case according to Claim 2, **characterized in that** the nuts (13) are inserted into shaped plastic parts (15) in a rotationally fixed manner, with the cross section of the shaped plastic parts (15) being matched to the groove (4) and the said shaped plastic parts being provided with a resilient limb (16) and thus retained in the groove (4) with a friction fit.

4. Case according to Claim 1, **characterized in that** the fastening screws are in the form of screw bolts (9) which are fastened to the inner face of the front plate (3) which faces the case (1) and in each case pass through a limb of an L-shaped support bracket which is supported on the centre web (6) by the limb (10) through which the screw bolt (9) passes and stands upright directly on the front plate (3) with its other limb (12), with a nut (13), which is tightened towards that limb (10) of the support bracket (11) which rests on the centre web (6), being screwed onto each screw bolt (9).

5. Case according to one or more of the preceding claims, **characterized in that** the termination web (5) runs in an inclined manner in relation to the front plate (3) and forms an acute angle with the centre web (6).

## Revendications

1. Boîtier (1) rectangulaire destiné à loger des composants électriques ou électroniques, comprenant un cadre (2) constituant les parois latérales et constitué en tôle et un panneau frontal (3) fixé sur le cadre (2), **caractérisé en ce que** le cadre (2), du côté qui est orienté en direction du panneau frontal (3), est pourvu d'une rainure (4) ouverte en direction de l'extérieur, taillée en contre-dépouille et formée de plusieurs parties pliées, **en ce que** la rainure (4) est délimitée par une aile formant bordure (5) orientée en direction du panneau frontal (3), par une aile médiane (6) parallèle au panneau frontal (3) et par une aile latérale (7) supplémentaire, s'étendant approximativement perpendiculairement au panneau frontal (3), et **en ce que** le panneau frontal (3), de son côté qui est orienté en direction du cadre (2), est pourvu d'un joint (8) périphérique qui repose sur l'arête frontale de l'aile formant bordure (5), le panneau frontal (3) étant fixé vis-à-vis du cadre (2), en tout, par plusieurs vis de fixation (9, 14).

2. Boîtier selon la revendication 1, **caractérisé en ce que** les vis de fixation (14) traversent le panneau frontal (3) et sont vissées dans des écrous (13) qui peuvent coulisser à l'intérieur de la rainure (4).

3. Boîtier selon la revendication 2, **caractérisé en ce que** les écrous (13) sont insérés, sans possibilité de rotation, dans des pièces moulées en matière synthétique (15), la section transversale des pièces moulées en matière synthétique (15) étant adaptée à la rainure (4) et celles-ci étant pourvues d'une branche (16) élastique, ce qui les maintient par frottement dans la rainure (4).

4. Boîtier selon la revendication 1, **caractérisé en ce que** les vis de fixation sont conformées en boulons filetés (9), qui sont fixés sur la face interne du panneau frontal (3) qui est orientée en direction du boîtier (1) et qui traversent respectivement une branche d'une cornière de support en forme de L qui s'appuie, par la branche (10) qui est traversée par le boulon fileté (9), sur l'aile médiane (6) et, par son autre branche (12) se dresse directement sur le panneau frontal (3), un écrou (13) étant vissé sur chaque boulon fileté (9), écrou qui est serré sur la branche (10) de la cornière de support (11) qui repose sur l'aile médiane (6).

5. Boîtier selon l'une ou plusieurs des revendications précédentes, **caractérisé en ce que** l'aile formant bordure (5) s'étend de façon inclinée par rapport au panneau frontal (3) et forme un angle aigu avec l'aile médiane (6).
